Europäisches Patentamt

European Patent Office

Office européen des brevets

(11) Numéro de publication: **0 040 832**
**B1**

(12) **FASCICULE DE BREVET EUROPEEN**

(45) Date de publication du fascicule du brevet: **12.09.84**

(21) Numéro de dépôt: **81103931.2**

(22) Date de dépôt: **22.05.81**

(51) Int. Cl.³: **F 16 D 1/02**

(54) **Dispositif d'accouplement entre deux rotors.**

(30) Priorité: **28.05.80 FR 8011779**

(43) Date de publication de la demande:
**02.12.81 Bulletin 81/48**

(45) Mention de la délivrance du brevet:
**12.09.84 Bulletin 84/37**

(84) Etats contractants désignés:
**AT BE CH DE FR GB IT LI LU NL SE**

(56) Documents cités:
**BE-A- 526 351**
**DE-A-2 757 163**
**FR-A- 719 538**
**FR-A- 930 500**
**FR-A-2 322 296**
**GB-A- 122 746**
**US-A-1 960 046**
**US-A-2 872 227**
**US-A-3 298 725**
**US-A-3 603 626**

(73) Titulaire: **ALSTHOM-ATLANTIQUE Société anonyme dite:**
**38, Avenue Kléber**
**F-75784 Paris Cedex 16 (FR)**

(72) Inventeur: **Foucher, Gérard**
**4, rue Olivier de Serres**
**F-93290 Tremblay Les Gonesse (FR)**

(74) Mandataire: **Weinmiller, Jürgen et al**
**Zeppelinstrasse 63**
**D-8000 München 80 (DE)**

Courier Press, Leamington Spa, England.

EP 0 040 832 B1

## Description

La présente invention a trait à un dispositif d'accouplement entre deux rotors comportant un plateau terminant chaque rotor, chaque plateau comprenant plusieurs orifices disposés le long de sa circonférence en regard d'un orifice de l'autre plateau et destinés à recevoir des éléments de solidarisation pour joindre ensemble les deux plateaux, lesdits éléments de solidarisation étant de deux types, les éléments de solidarisation du premier type étant constitués chacun par un boulon de serrage dimensionné pour pénétrer avec jeu dans des orifices bruts d'usinage situés en regard, les éléments de solidarisation du second type étant prévus chacun pour pénétrer dans deux alésages de précision de de même section obtenus par alésage d'orifices en regard et situés l'un en face de l'autre lorsque les boulons de serrage sont en place, chaque élément de solidarisation du second type comprenant d'une part une douille cylindrique extérieurement et conique intérieurement et d'autre part une broche comportant premièrement une partie conique qui vient repousser la douille contre les parois des alésages de précision, deuxièmement une partie filetée à une extrémité sur laquelle est vissé un écrou qui vient fixer la broche en position, troisièmement une extrémité permettant la préhension.

Un tel dispositif d'accouplement est décrit dans FR - A - 2322296; grâce aux boulons de serrage on transmet les forces axiales et grâce aux broches avec douilles on transmet les mouvements de torsion.

Dans le dispositif d'accouplement connu, les douilles sont déformées contre la paroi des alésages de précision par la pression de la partie conique des broches associées.

Ainsi, il est possible en fonctionnement normal de ne pas perdre l'alignement initial des rotors.

Toutefois, en raison de la contrainte initiale, les douilles et broches présentent une capacité de cisaillement initiale diminuée. De plus, pour permettre une déformation aisée des douilles, il est nécessaire d'employer des douilles de faibles épaisseurs.

Par ailleurs, au cas où il serait passé un incident parce que le couple aurait dépassé la valeur correspondant à la limite élastique des douilles, les douilles vont se déformer plastiquement et peuvent prendre la forme d'une manivelle.

Les douilles sont alors très difficiles à enlever. Dans le dispositif d'accouplement selon l'invention permettant d'éviter ces inconvénients, chaque douille est en deux parties obtenues par sciage longitudinal, chacune desdites parties étant légèrement moins étendue qu'un demi-cylindre de façon qu'en position les deux parties de la douille soient espacées l'une de l'autre.

Les deux parties de douilles repoussées par la broche associée viennent s'appliquer contre les parois des alésages sans déformation et si à la suite d'un incident elles se sont mises en manivelle, il est possible après avoir retiré la broche de retirer les deux parties de douilles sans avoir à les détruire, ce qui risquerait d'endommager les alésages. Il est vrai que FR - A - 719538 montre déjà à peu près la caractéristique de la revendication 1, mais cette douille connue ne présente aucune capacité de cisaillement et doit être déformée elastiquement. Ella remplace seulement un écrou ordinaire et les surfaces extérieure et intérieure doivent être toutes les deux côniques. Ce document n'incite pas l'homme de métier à appliquer cette douille de liaison aux accouplements de torsion connus, per exemple à celui de FR - A - 2322296.

Selon une réalisation préférentielle de l'invention, l'extrémité de la broche opposée à l'écrou est filetée, ce qui permet d'y adapter un arrache-moyeu pour arracher la broche.

La présente invention sera mieux comprise à la lumière de la description qui va suivre donnée à titre d'exemple dans laquelle

— la figure 1 représente une vue en élévation avec arrachement partiel du dispositif selon l'invention,

— la figure 2 représente une coupe panoramique des boulons et éléments de solidarisation,

— la figure 3 représente une coupe longitudinale au niveau d'un élément de solidarisation.

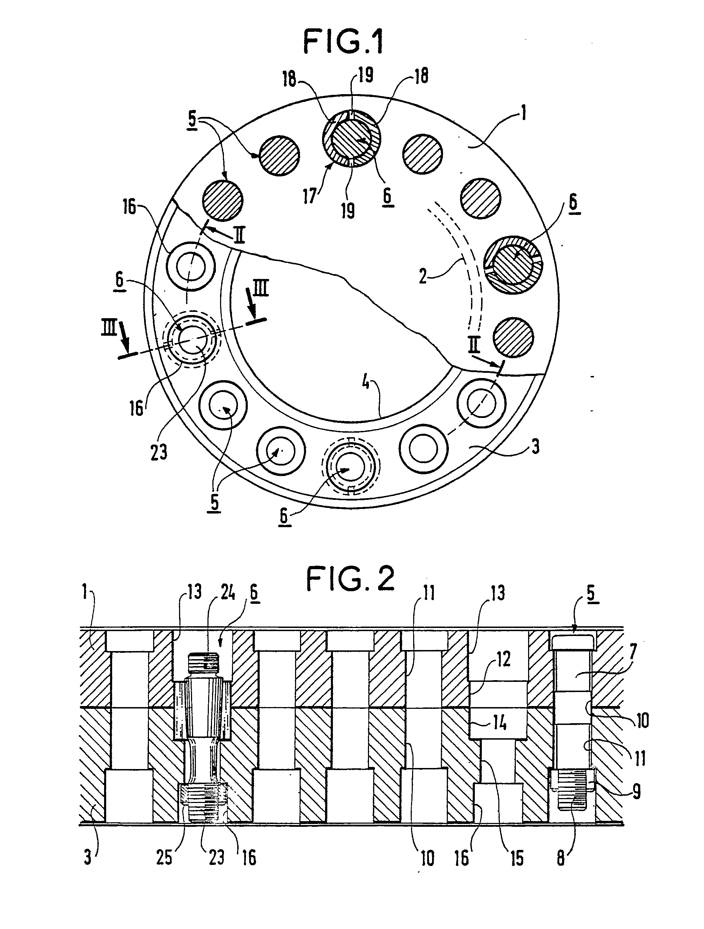

Sur la figure 1 est représenté un plateau 1 terminant un rotor 2 destiné à tenir au contact d'un plateau 3, terminant un rotor 4 (voir également figure 2). Pour accoupler les deux plateaux, on utilise plusieurs boulons de serrage 5 (éléments de solidarisation du premier type) et 4 éléments de solidarisation 6 (du second type). Les boulons 5 et les éléments 6 sont répartis sur un cylindre de même axe que celui des rotors (voir la coupe panoramique figure 2).

Sur la figure 2 est représenté un boulon de serrage 5 comportant une broche 7 terminée par une partie filetée sur laquelle se visse un écrou 9. Le milieu de la broche 7 située à cheval dans les plateaux comporte une partie 10 de diamètre très voisin du diamètre interne de l'alésage recevant la broche. Toutefois, pour pouvoir entrer la broche 7, il est nécessaire de prévoir un certain jeu entre la partie 10 et l'alésage 11.

Pour loger les éléments 6, il est prévu dans le plateau 1 un alésage 12 de précision débouchant sur la face intérieure en contact avec l'autre plateau suivi d'un alésage 13 de dimensions supérieures débouchant sur la face extérieure du plateau 1.

Dans le plateau 3 est prévu un alésage 14 situé exactement en face de l'alésage 12. Cet alésage 14 se poursuit par un alésage 15 plus étroit et se termine par un logement 16 débouchant sur la face extérieure du plateau.

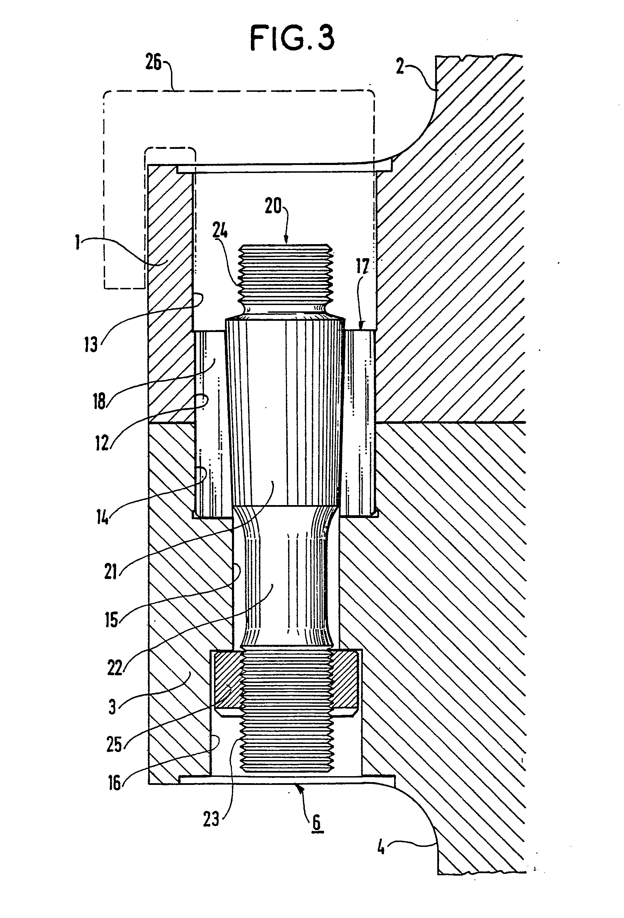

La figure 3 représente un élément de solidarisation 6 en position. Cet élément comporte une douille 17 sciée en deux longitudinalement. Les deux parties 18 de la douille 17 sont égales maix une portion a été supprimée de façon qu'en position les deux parties 18 laissent un espace 19 (voir figure 1) entre leurs extrémités.

Cette douille 17 est cylindrique extérieurement et conique intérieurement.

L'élément 6 comporte également une broche 20 comprenant une partie conique 21 de même conicité que la douille 17. Cette partie conique 18 est continuée par un col 22 terminé par une partie filetée 23. A l'opposé du col 22, la partie conique est terminée par une autre partie filetée 24.

La douille 17 est placée dans les alésages 12 14. La partie conique 21 de la broche 20 repousse les deux parties 18 de cette douille 17 contre les parois des alésages 12 et 14. Un écrou 25 prenant appui sur le fond du logement 16 est vissé sur la partie filetée 23 maintenant la broche 20 en position.

Pour accoupler les rotors, on dispose en parallèle les deux plateaux 1 et 3 puis on rapproche les deux plateaux en s'assurant que les deux rotors 2 et 4 sont alignés.

On fixe alors les boulons de serrage 5.

Une fois les plateaux fixés l'un à l'autre par les boulons de serrage, on alèse avec précision les alésages 12 et 14 de façon qu'ils soient exactement de mêmes dimensions et situés en face l'un de l'autre. Au besoin la douille 17 est usinée pour que son diamètre extérieur soit égal à celui des alésages 12 et 14. Ensuite on fabrique les deux parties 18 à partir de la douille 17.

Les deux parties sont introduites dans les alésages 12 et 14.

On introduit alors la broche 20 par l'alésage 24. On met un peigne à trois dents 26 pour maintenir les espaces 19 entre les parties 18 de la douille 17. On visse l'écrou 25 sur la partie filetée qui dépasse dans le logement 16.

En vissant l'écrou 25, la partie conique 21 s'avance vers le fond de l'alésage 14 et écarte les deux parties 18 de douille 17. Lorsque l'écrou 25 est vissé, les deux plateaux 1 et 3 sont solidarisés par l'élément 6 et il n'y a aucun jeu entre la douille 17 et les parois des alésages 12 et 14. On retire alors le peigne 26. On utilise des éléments 6 au nombre par exemple de 3 ou 4.

Lorsque les éléments 6 sont en place, les rotors sont accouplés.

Pendant la rotation des rotors en fonctionnement normal, il y a maintien de la concentricité.

Au cas où, en fonctionnement, le couple admissible aurait été dépassé, les douilles 17 ont pris une forme de manivelle.

Il y a désalignement des rotors. Pour les désaccoupler, il faut retirer les éléments 6. Pour chaque élément, après avoir dévissé les écrous 25, on visse un arrache-moyeu sur la partie 24 et en prenant appui sur la douille 17 on arrache la broche 20. On enlève donc facilement la broche 20 et les deux parties 18 de douille s'enlèvent très aisément par l'alésage 13 grâce aux espaces 19.

## Revendications

1. Dispositif d'accouplement entre deux rotors (2, 4) comportant un plateau (1, 3) terminant chaque rotor (2, 4) chaque plateau (1, 3) comprenant plusieurs orifices (10, 12) disposés le long de sa circonférence en regard d'un orifice (11, 14) de l'autre plateau (3, 1) et destinés à recevoir des éléments de solidarisation (5, 6) pour joindre ensemble les deux plateaux (1, 3), lesdits éléments de solidarisation étant de deux types, les éléments de solidarisation du premier type (5) étant constitués chacun par un boulon de serrage dimensionné pour pénétrer avec jeu dans les orifices bruts d'usinage (10, 11) situés en regard, les éléments de solidarisation du second type (6) étant prévus chacun pour pénétrer dans deux alésages de précision (12, 14) de même section obtenus par alésage d'orifices en regard et situés l'un en face de l'autre lorsque les boulons de serrage (5) sont en place, chaque élément de solidarisation du second type (6) comprenant d'une part une douille (17) cylindrique extérieurement et conique intérieurement et d'autre part une broche (20) comportant premièrement une partie conique (21) qui vient repousser la douille (18) contre les parois des alésages (12, 14) de précision, deuxièmement une partie filetée (23) à une extrémité sur laquelle est vissé un écrou (25) qui vient fixer la broche (20) en position, troisièmement une extrémité (24) permettant la préhension, caractérisé en ce que la douille (17) est en deux parties (18) obtenues par sciage longitudinal, chacune desdites parties (18) étant légèrement moins étendue qu'un demi-cylindre de façon qu'en position les deux parties (18) de la douille (17) soient espacées l'une de l'autre.

2. Dispositif d'accouplement selon la revendication 1, caractérisé en ce que l'extrémité (24) de la broche (20) permettant la préhension hension est filetée permettant ainsi d'y adapter un arrachemoyeu.

## Ansprüche

1. Koppelvorrichtung zwischen zwei Rotoren (2, 4), die eine Platte (1, 3) am Ende jedes Rotors (2, 4) aufweist, wobei jede Platte (1, 3) mehrere Öffnungen (10, 12) enthält, die entlang ihres Umfangs gegenüber einer Öffnung (11, 14) der anderen Platte (3, 1) angeordnet sind und Befestigungselemente (5, 6) aufnehmen sollen, um die beiden Platten (1, 3) zu verbinden, wobei die Befestigungselemente von zwei Typen sind, nämlich Befestigungselemente des ersten Typs (5), die je aus einem Spannbolzen bestehen, der so gestaltet ist, daß er mit Spiel in die gegenüberliegenden unbearbeiteten Öffnungen (10, 11) eindringt, und die Befestigungselemente des zweiten Typs (6), die je dazu vorgesehen sind, in zwei Präzisionsbohrungen (12, 14) gleichen Querschnitts einzudringen, die durch Bohrung von gegenüberliegenden Öffnungen erhalten werden und sich gegenüberliegen, wenn die Spannbolzen (5) angebracht sind, wobei jedes Befestigungselement des zweiten Typs (6) einerseits eine außen zylindrische und innen konische Hülse (17) und andererseits einen Stift (20) aufweist, der erstens einen konischen Bereich (21), der die Hülse (18) gegen die Wände der Präzisionsbohrungen (12, 14) drückt, zweitens einen Gewindebereich (23) an einem Ende, auf das eine Mutter (25) geschraubt ist, die den Stift (20) in Stellung hält, und drittens ein Ende (24) aufweist, das das Greifen ermöglicht, dadurch gekennzeichnet, daß die Hülse (17) aus zwei Teilen (18) besteht, die durch einen Längsschnitt entstehen, wobei jedes dieser Teile (18) geringfügig weniger breit ist als ein Halbzylinder, so daß die beiden Teile (18) der Hülse (17) in Position voneinander einen Abstand besitzen.

2. Koppelvorrichtung nach Anspruch 1, dadurch gekennzeichnet, daß das Ende (24) des Stifts (20), das das Greifen ermöglicht, mit einem Gewinde versehen ist, um die Anpassung eines Nabenziehgeräts zu ermöglichen.

**Claims**

1. A coupling device between two rotors (2, 4) comprising a plate (1, 3) at the end of each rotor (2, 4), each plate (1, 3) comprising several openings (10, 12) disposed along its circumference, in face to face relationship to openings (11, 14) of the other plate (3, 1) and destined to receive fixing elements (5, 6) for joining the two plates (1, 3) together, said fixing elements being of two types, the fixing elements of the first type (5) being constituted each of a locking bolt dimensioned to penetrate with clearance into the aligned unfinished openings (10, 11), the fixing elements of the second type (6) being each provided for penetrating into two precision bores (12, 14) of the same section obtained by boring aligned openings and situated face to face to each other when the locking bolts (5) are in place, each fixing element of the second type (6) comprising on the one hand a sleeve (17) which is cylindrical at the outside and conical at the inside, and on the other hand a rod (20) comprising firstly a conical part (21) which pushes the sleeve (18) back against the walls of the precision bores (12, 14), secondly on one end a threaded part (23) on which a nut (25) is threaded which fixes the rod (20) in position, thirdly an end (24) allowing the prehension, characterized in that the sleeve (17) is composed of two parts (18) obtained by longitudinal sawing, each of said parts (18) being slightly smaller than a semi-cylinder, so that in position, the two parts (18) of the sleeve (17) are distanced from one another.

2. A coupling device according to claim 1, characterized in that the end (24) of the rod (20) permitting the prehension is threaded so as to permit the engagement of a draw die.

0 040 832

# FIG.1

# FIG. 2

1

# FIG.3